# EUROPÄISCHE PATENTSCHRIFT

(11) **EP 2 537 614 B1**
(45) Veröffentlichungstag und Bekanntmachung des Hinweises auf die Patenterteilung: **03.12.2014**
(21) Anmeldenummer: 12169294.1
(22) Anmeldetag: 24.05.2012
(51) Int. Cl.: B23C 5/24, B42C 5/04

(54) **Vorrichtung zur Rückenbearbeitung von Buchblocks**
Device for processing the back of book blocks
Dispositif de traitement du dos de blocs de livres

(30) Priorität: 20.06.2011 DE 102011105033
(43) Veröffentlichungstag der Anmeldung: 26.12.2012
(73) Patentinhaber: Müller Martini Holding AG, 6052 Hergiswil (CH)
(72) Erfinder: Sommerer, Frank, 04288 Leipzig (DE); Adler, Michael, 06808 Holzweißig (DE); Werner, Jörg, 04757 Oschatz (DE)

(56) Entgegenhaltungen:
- EP-A1- 1 378 373
- DE-A1- 10 022 836

## Beschreibung

Die Erfindung betrifft ein Kombifräswerkzeug zur Rückenbearbeitung von Buchblocks, welches einen kreisförmigen, rotierbar antreibbaren, Grundkörper aufweist. Der Grundkörper trägt an einem äußeren Ring sogenannte Egalisierwerkzeuge. Weitere von außen nach innen koaxial ineinander angeordnete Werkzeugringe tragen sogenannte Fräsertypen "Kerber" und "Mikrokerber" sowie einen Bürstenring. Die Werkzeugringe sind mittels Schraubverbindungen miteinander verbunden und durch eine Drehung um eine Antriebsachse zueinander höhenverstellbar gelagert.

Ein derartiges Kombifräswerkzeug ist z. B. durch die DE 100 22 836 B4 bekannt. Zur Arretierung des Werkzeugringes sind Rastmittel vorgesehen, welche den Werkzeugring in einer vorgegebenen Winkelstellung am Grundkörper arretieren. Auf diese Weise ist eine stufenweise Höhenverstellung des Werkzeugringes möglich.

Der Erfindung liegt die Aufgabe zugrunde, ein Kombifräswerkzeug zur Rückenbearbeitung von Buchblocks zu schaffen, bei welchem unterschiedliche Werkzeugringe stufenlos zueinander einstellbar sind.

Die Aufgabe wird erfindungsgemäß durch die Merkmale des Anspruchs 1 gelöst.

Es ist ein besonderer Vorteil der Erfindung, dass die Werkzeugringe in jeder Drehwinkellage bezüglich des Grundkörpers arretierbar sind. Durch diese Maßnahme kann eine stufenlos höheneinstellbare Werkzeugposition erreicht werden.

In vorteilhafter Ausgestaltung wird die Arretierung durch Druckschrauben ermöglicht, die jedem Ring zugeordnet sind.

In vorteilhafter Ausführung ist jede Druckschraube in einer Gewindebohrung jedes Werkzeugringes achsparallel zur Antriebsachse des Kombiwerkzeuges angeordnet. In einer gewünschten Einstellung stützt sich die Druckschraube am Grundkörper des Kombifräswerkzeuges ab, so dass eine Drehbewegung der Werkzeugringe blockiert und somit eine Höhenverstellung blockiert wird.

In einer weiteren vorteilhaften Ausgestaltung ist das Gewinde zwischen den Werkzeugringen ein Feingewinde, insbesondere ein Linksgewinde.

Ein Ausführungsbeispiel ist in den Zeichnungen dargestellt und wird im Folgenden beschrieben.

Es zeigen:

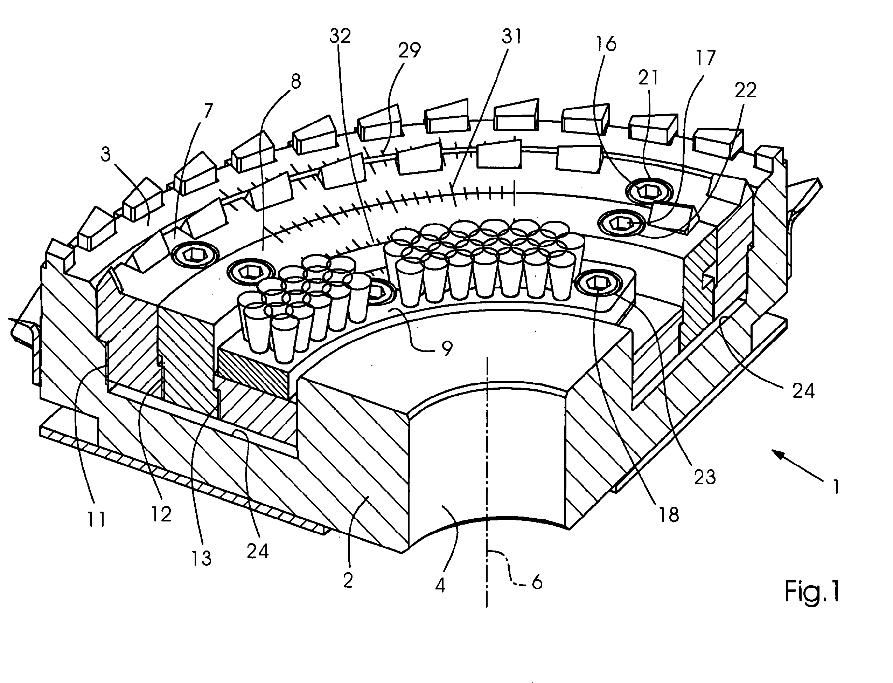

- Figur 1: einen Ausschnitt des erfindungsgemäßen Kombifräswerkzeuges in perspektivischer Ansicht

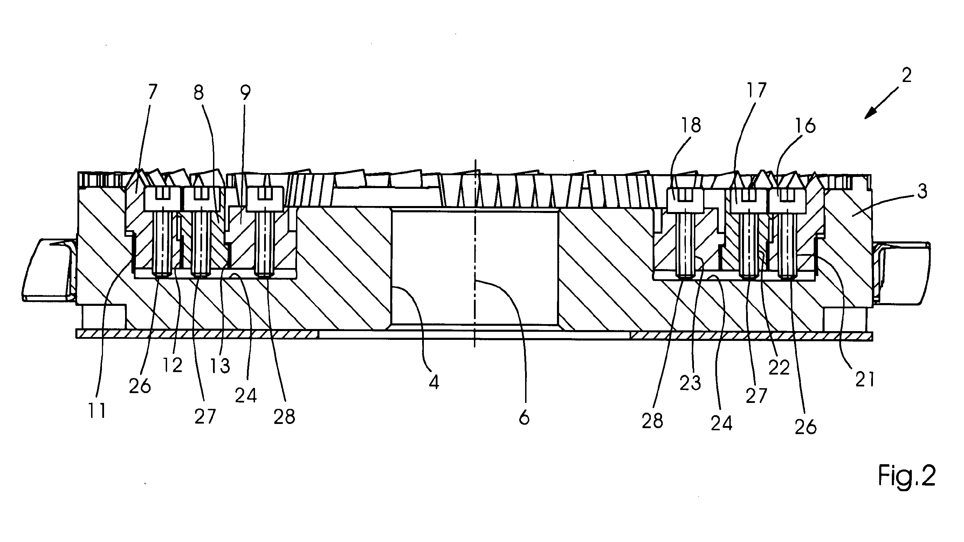

- Figur 2: einen Querschnitt durch das Kombifräswerkzeug

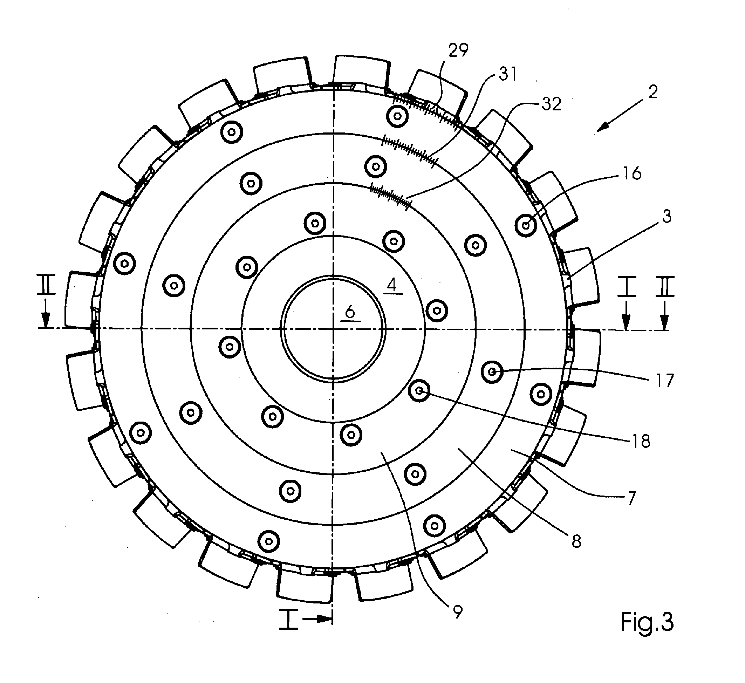

- Figur 3: eine Draufsicht auf eine Oberseite des Kombifräswerkzeuges

Ein Kombifräswerkzeug 1 zur Vorbereitung von Buchblockrücken für das Auftragen von Klebstoff zum Verbinden der Blätter weist einen rotationsangetriebenen Werkzeugkopf 2 auf. Der Werkzeugkopf 2 weist einen "Egalisierwerkzeuge" tragenden Außenring 3 auf und eine koaxial dazu angeordnete und fest damit verbundene Aufnahme 4 z. B. Flanschverbindung für eine Antriebswelle 6 des Kombifräswerkzeuges 1 auf.

Zwischen dem Außenring 3 und der Aufnahme 4 ist eine Anzahl von Werkzeuge tragenden Ringen 7, 8, 9 koaxial ineinander angeordnet. Die Werkzeugringe 7, 8, 9 sind gegenüber dem Außenring 3 und auch gegeneinander verdrehbar gelagert. Zwischen den Ringen 3, 7, 8, 9, 4 sind Gewinde 11 bis 13 vorgesehen, die durch ihre Gewindegänge eine Höhenpositionierung der verdrehbaren Ringe 7 bis 9 ermöglichen.

Der Ring 7 ist mit Fräswerkzeugen ausgestattet, sogenannten "Mikrokerbern".

Der Ring 8 weist sogenannte "Kerber" Fräswerkzeuge auf und der Ring 9 weist "Bürsten" auf.

Jeder Ring 7 bis 9 weist zu seiner Arretierung eine Anzahl von am Umfang jedes Ringes 7, 8, 9 verteilt angeordneten Druckschrauben 16, 17, 18 auf, welche mit achsparallel zur Antriebswelle 6 angeordneten Gewindebohrungen 21, 22, 23 in Schraubverbindung stehen. Die Druckschrauben 16 bis 18 sind jeweils derart in ihren jeweiligen Gewindebohrungen 21 bis 23 angeordnet, dass eine Spitze 26, 27, 28 jeder Druckschraube 16 bis 18 an einem Boden 24 des Werkzeugkopfes 2 abgestützt ist.

Durch diese Maßnahme wird ein Spiel aus dem jeweiligen Gewinde 11 bis 13 herausgedrückt und eine Verdrehung des Werkzeugringes 7 bis 9 vermieden.

Zur Einstellung eines Werkzeugringes 7; 8; 9 und somit einer Höhenpositionierung des jeweiligen auf den Ringen 7 bis 9 angeordneten Werkzeuges werden zunächst die Druckschrauben 16 bis 18 des jeweiligen Ringes 7; 8; 9 gelöst, daraufhin wird dieser im oder gegen den Uhrzeigersinn gedreht, wodurch sich durch die vorzugsweise verwendeten Linksgewinde eine Hochstellung des Werkzeugringes gegenüber dem als Basis dienenden Außenring 3 dadurch ergibt, dass der jeweilige Ring im Uhrzeigersinn gedreht wird. Eine Verdrehung gegen den Uhrzeigersinn bewirkt entsprechend eine Niederstellung des Ringes. Durch jeweils zwischen den Ringen angeordnete Skalierungen 29, 31, 32 ist ein genaues Maß für die Höher- oder Tieferstellung leicht ablesbar. Nach einer erfolgten Positionierung werden die Druckschrauben 16 bis 18 soweit in ihre Gewindebohrungen 21 bis 23 hinein geschraubt, bis die jeweilige Spitze 26; 27, 28 den Boden 24 des Werkzeugkopfes 2 berührt. Vorzugsweise wird ein einzuhaltendes Drehmoment vorgegeben, damit eine sichere Arretierung gewährleistet ist.

### Bezugszeichenliste

- 1: Kombifräswerkzeug
- 2: Werkzeugkopf
- 3: Außenring (Egalisierwerkzeug)
- 4: Aufnahme (6)
- 5:
- 6: Antriebswelle
- 7: Werkzeugring (Mikrokerber)
- 8: Werkzeugring (Kerber)
- 9: Werkzeugring (Bürste)
- 10:
- 11: Gewinde
- 12: Gewinde
- 13: Gewinde
- 14: Gewinde
- 15:
- 16: Druckschrauben (7)
- 17: Druckschrauben (8)
- 18: Druckschrauben (9)
- 20:
- 21: Gewindebohrung (16)
- 22: Gewindebohrung (17)
- 23: Gewindebohrung (18)
- 24: Boden (2)
- 26: Spitze (16)
- 27: Spitze (17)
- 28: Spitze (18)
- 29: Skalierung (3 - 7)
- 30:
- 31: Skalierung (7 - 8)
- 32: Skalierung (8 - 9)

## Patentansprüche

1. Kombifräswerkzeug zur Rückenbearbeitung von Buchblocks, mit einem rotationsangetriebenen Werkzeugkopf mit am Umfang verteilt angeordneten äußeren Werkzeugen und mit koaxial innerhalb von den äußeren Werkzeugen verdrehbar angeordneten weiteren Werkzeugen,
**dadurch gekennzeichnet,**
**dass** die weiteren Werkzeuge jeweils auf einem Werkzeugring (7; 8; 9) angeordnet sind,
**dass** die Werkzeugringe (7, 8, 9) mittels vorgesehener Gewinde (11, 12, 13) miteinander in Schraubverbindung stehen und
das jeder Werkzeugring (7 bis 9) in beliebiger Position mittels einer Anzahl von Druckschrauben (16; 17; 18) an einem Boden (24) des Werkzeugkopfes (2) stufenlos arretierbar ist.

2. Kombifräswerkzeug nach Anspruch 1,
**dadurch gekennzeichnet,**
**dass** die Schraubverbindungen als Linksgewinde (11 bis 14) ausgebildet sind.

3. Kombifräswerkzeug nach Anspruch 1,
**dadurch gekennzeichnet,**
**dass** Skalierungen (26, 27, 28) zwischen den benachbarten Werkzeugringen (3, 7, 8, 9) vorgesehen sind.

4. Kombifräswerkzeug nach einem der Ansprüche 1 bis 3,
**dadurch gekennzeichnet,**
**dass** der Werkzeugkopf (2) eine Aufnahme (4) für eine Antriebswelle (6) aufweist.

5. Kombifräswerkzeug nach einem der Ansprüche 1 bis 4,
**dadurch gekennzeichnet,**
**dass** der erste Werkzeugring (7) Fräswerkzeuge des Typs "Mikrokerber" trägt.

6. Kombifräswerkzeug nach einem der Ansprüche 1 bis 4,
**dadurch gekennzeichnet,**
**dass** der zweite Werkzeugring (8) Fräswerkzeuge des Typs "Kerber" trägt.

7. Kombifräswerkzeug nach einem der Ansprüche 1 bis 4,
**dadurch gekennzeichnet,**
**dass** der dritte Werkzeugring (9) Bürsten trägt.

8. Kombifräswerkzeug nach einem der Ansprüche 1 bis 4,
**dadurch gekennzeichnet,**
**dass** der Werkzeugkopf (2) auf seinem Außenring (3) "Egalisierwerkzeuge" trägt.

## Claims

1. Combination milling tool for treating the spines of books, comprising a tool head driven to rotate and having outer tools distributed on the circumference and further tools coaxially arranged for rotation inside the outer tools,
**characterized in**
**that** the further tools are arranged on a respective tool ring (7; 8; 9),
**that** the tool rings (7, 8, 9) are interconnected by a screw connection via threads (11, 12, 13) that are provided, and
**that** each tool ring (7 to 9) is continuously lockable in any desired position on a bottom (24) of the tool head (2) by means of a number of pressure screws (16; 17; 18).

2. Combination milling tool according to Claim 1,
**characterized in**
**that** the screw connections are left-hand threads (11 to 14).

3. Combination milling tool according to Claim 1,
**characterized in**
**that** scales (26, 27, 28) are provided between the adjacent tool rings (3, 7, 8, 9).

4. Combination milling tool according to any one of Claims 1 to 3,
**characterized in**
**that** the tool head (2) has a receiving element (4) for a drive shaft (6).

5. Combination milling tool according to any one of Claims 1 to 4,
**characterized in**
**that** the first tool ring (7) carries milling tools of the "fibre rougher" type.

6. Combination milling tool according to any one of Claims 1 to 4,
**characterized in**
**that** the second tool ring (8) carries milling tools of the "notching" type.

7. Combination milling tool according to any one of Claims 1 to 4,
**characterized in**
**that** the third tool ring (9) carries brushes.

8. Combination milling tool according to any one of Claims 1 to 4,
**characterized in**
**that** on its outer ring (3), the tool head (2) carries "leveller cutting tools".

## Revendications

1. Outil de fraisage combiné pour le traitement de dos de cahier avec une tête d'outil entraînée en rotation avec des outils externes répartis sur la périphérie et d'autres outils disposés de manière rotative coaxiale à l'intérieur des outils externes,
**caractérisé en ce**
**que** les autres outils sont disposés respectivement sur un anneau porte-outils (7, 8, 9),
**que** les anneaux porte-outils (7, 8, 9) sont reliés entre eux par vissage au moyen de filetages prévus (11, 12, 13) et chaque anneau porte-outil (7 à 9) est blocable en continu dans n'importe quelle position au moyen d'une pluralité de vis de pression (16, 17, 18) sur un fond (24) de la tête d'outil (2).

2. Outil de fraisage combiné selon la revendication 1,
**caractérisé en ce**
**que** les connexions vissées sont réalisées comme des filetages gauches (11 à 14).

3. Outil de fraisage combiné selon la revendication 1,
**caractérisé en ce**
**qu'**il est prévu des échelles (26, 27, 28) entre les anneaux porte-outils voisins (3, 7, 8, 9).

4. Outil de fraisage combiné selon l'une des revendications 1 à 3,
**caractérisé en ce**
**que** la tête d'outil (2) présente un logement (4) pour un arbre d'entraînement (6).

5. Outil de fraisage combiné selon l'une quelconque des revendications 1 à 4,
**caractérisé en ce**
**que** le premier anneau porte-outil (7) porte des outils de fraisage du type "micro-rainurage".

6. Outil de fraisage combiné selon l'une des revendications 1 à 4,
**caractérisé en ce**
**que** le deuxième anneau porte-outil (8) porte des outils de fraisage du type "rainurage".

7. Outil de fraisage combiné selon l'une quelconque des revendications 1 à 4,
**caractérisé en ce**
**que** le troisième anneau porte-outil (9) porte des brosses.

8. Outil de fraisage combiné selon l'une quelconque des revendications 1 à 4,
**caractérisé en ce**
**que** la tête d'outil (2) porte sur son anneau externe (3) des "outils d'égalisation" .
